# FASCICULE DE BREVET EUROPEEN

(11) **EP 2 165 295 B1**
(45) Date de publication et mention de la délivrance du brevet: **27.01.2016**
(21) Numéro de dépôt: 08826572.3
(22) Date de dépôt: 19.06.2008
(51) Int. Cl.: G06K 19/077

(54) **INSERT SÉCURISÉ NOTAMMENT POUR CARTE À PUCE**
GESCHÜTZTER EINSATZ INSBESONDERE FÜR CHIPKARTEN
SECURE INSERT INTENDED, IN PARTICULAR, FOR A CHIP CARD

(30) Priorité: 21.06.2007 FR 0704424
(43) Date de publication de la demande: 24.03.2010
(73) Titulaire: Smart Packaging Solutions (SPS), 13106 Rousset Cedex (FR)
(72) Inventeur: ELBAZ, Didier, 13010 Marseille (FR); BATTMANN, Thomas, 13080 Luynes (FR)
(74) Mandataire: Nicolle, Olivier
(86) Numéro de dépôt international: PCT/FR2008/000861
(87) Numéro de publication internationale: WO 2009/013407

(56) Documents cités:
- EP-A- 0 570 784
- WO-A-01/41060
- JP-A- 2002 216 097
- US-A1- 2003 052 177
- HAGHIRI YAHYA: "Vom Plastik zur Chipkarte" VOM PLASTIK ZUR CHIPKARTE: WEGWEISER ZUM AUFBAU UND ZUR HERSTELLUNG VON CHIPKARTEN, XX, XX, 1999, pages 26-29,240, XP002254868

## Description

La présente invention concerne un insert sécurisé, notamment pour carte à puce, et en particulier, mais pas uniquement, pour carte à puce sans contact.

On connaît dans l'état de la technique plusieurs procédés pour assembler les composantes d'une carte à puce en vue d'obtenir une carte présentant certaines caractéristiques de résistance à la flexion, et à la délamination des couches du corps de carte. Ces procédés connus utilisant plusieurs feuilles en matière plastique assemblées par lamination à chaud ou à froid, ont été assez largement mis en oeuvre, de sorte que les cartes à puce sont devenues d'un usage quasiment généralisé.

Malheureusement le succès de la carte à puce en tant qu'objet très répandu a également développé une problématique grandissante autour de la falsification des cartes à puce. En effet, compte tenu de l'usage des cartes notamment en matière de paiement, de contrôle d'accès, de contrôle d'identité ou encore d'autres applications de la carte à puce, il a paru tentant à certaines filières de mettre sur le marché des cartes à puce contrefaites, non émises régulièrement par les émetteurs normaux de cartes à puce que sont les banques, les companies des téléphonie, ou encore d'autres émetteurs de cartes à puce notamment dans le domaine du contrôle d'accès ou du contrôle d'identité.

Certaines techniques de falsification consistent par exemple à effacer le logo qui a été réalisé par impression à la surface de la carte à puce, ou encore à reproduire sur de fausses cartes à puce, un logo contrefait. D'autres techniques de falsification consistent à exploiter la relative facilité pour séparer les couches laminées de la carte à puce, afin d'y placer un insert contrefait, tout en gardant les couches externes d'origine, ou inversement.

Il a donc paru utile à la demanderesse de mettre au point un procédé de fabrication de carte à puce qui permette d'augmenter la facilité pour vérifier si une carte est une vraie carte émise par son légitime émetteur, ou s'il s'agit d'une carte falsifiée.

Un autre but de l'invention est de proposer un procédé de fabrication qui permette d'augmenter la résistance mécanique au démontage des cartes à puce par délamination, ce qui est tout particulièrement utile pour les cartes à puce sans contact pourvues d'un insert portant une antenne pour la communication à distance avec un lecteur de carte à puce sans contact, mais également pour les cartes à contact laminées classiques.

A cet effet, le principe du procédé selon l'invention consiste à pourvoir l'insert de la carte d'un défaut d'homogénéité susceptible de produire après lamination une caractéristique visuelle ou tactile qui permette de reconnaître s'il s'agit d'une carte falsifiée ou non. Avantageusement, ce défaut d'homogénéité, outre l'effet visuel ou tactile, produit également une résistance accrue de l'insert et de la carte à puce par rapport au démontage des couches de la carte. En effet, cette caractéristique visuelle ou tactile est générée au sein même de la carte, de manière à rendre l'accès ultérieur à cette caractéristique, à des fins de falsification, beaucoup plus difficile.

L'invention a par conséquent pour objet un insert telque défini dans la revendication 1.

Pour fabriquer grâce à l'invention des inserts de haute sécurité pour cartes à puce sans contact, il est prévu que la feuille intermédiaire peut être pourvue d'une antenne. Dans ce cas, les évidements de la feuille intermédiaire de l'insert sont réalisés en-dehors de la zone couverte par l'antenne.

L'invention concerne également une carte à puce telque définie dans la revendication 5.

D'autres caractéristiques et avantages de l'invention apparaîtront à la lecture de la description détaillée et des dessins annexés dans lesquels :
- la figure 1A illustre un insert pour carte à puce, vu en plan ;
- La figure 2A illustre l'insert de la figure 1, vu en coupe transversale ; la figure 2B montre l'insert de la figure 2A, après lamination ;
- La figure 3 illustre en vue en coupe transversale A-A, une carte à puce comportant un insert selon les figures 1 et 2, et une pluralité de couches externes situées de part et d'autre de l'insert.

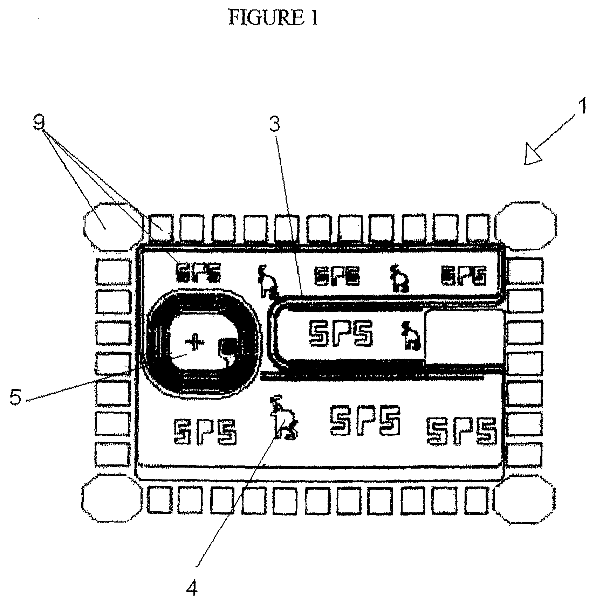

On se réfère à la figure 1. Dans cette figure, on a représenté en plan un insert 1 pour carte à puce selon l'invention. L'insert 1 montre en transparence une antenne 3 située dans l'épaisseur de l'insert, ou sérigraphiée à sa surface. Il s'agit donc dans cet exemple d'un insert pour carte sans contact, mais l'invention est également applicable aux inserts pour cartes à contact.

Comme on le voit en figure 1, l'insert 1 comporte une pluralité de trous ou d'évidements 9 qui peuvent être réalisés par découpe ou par moulage, en fonction des caractéristiques de taille et d'épaisseur de l'insert. Les trous juxtaposés peuvent constituer un motif quelconque ou un motif prédéterminé par l'émetteur de la carte à puce utilisant l'insert. Ainsi, on pourrait très bien imaginer un insert dont les trous représenteraient le logo d'une banque, ou d'un organisme de crédit ou de gestion de cartes bancaires. Ainsi dans l'exemple représenté, on a réalisé des évidements ayant la forme des lettres SPS. Mais il est également possible de prévoir un évidement unique, représentant à lui seul les contours d'un logo 4, sans qu'il soit nécessaire d'obtenir la forme du logo par juxtaposition de plusieurs points ou trous. C'est ainsi qu'on a réalisé le logo stylisé de « SPS » dans l'exemple représenté.

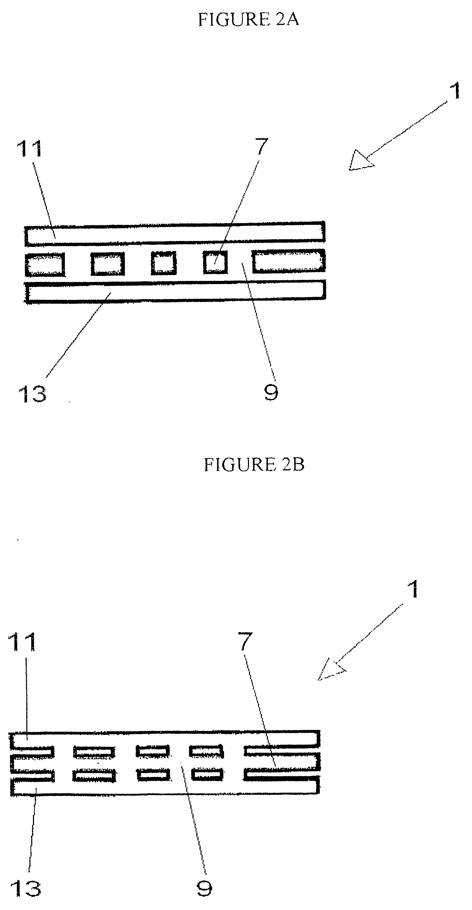

On se réfère à la figure 2A qui représente en coupe transversale A-A l'insert 1 de la figure 1. Comme on le voit, l'insert est constitué d'une couche intermédiaire 7 pourvue d'un ensemble d'évidements ou de trous 9, et de couches externes 11, 13. La feuille intermédiaire 7 a par exemple une épaisseur de l'ordre de 40 micromètres, et les feuilles externes 11, 13 ont une épaisseur de l'ordre de 100 micromètres, ce qui permet de réaliser un insert très fin de l'ordre de 240 micromètres, très bien adapté à la réalisation de cartes à puce d'épaisseur normalisée selon la norme ISO 7816. Bien entendu, d'autres dimensions sont possibles sans s'écarter du cadre de l'invention, et il est également possible de n'utiliser qu'une seule couche externe en matériau fluable, auquel cas son épaisseur sera de préférence comprise entre environ 100 et environ 400 micromètres.

Il est important de noter que le matériau des couches externes 11,13 de l'insert 1 est fluable, c'est-à-dire qu'il est choisi pour présenter des caractéristiques de fluage qui soient telles que lors de l'étape de lamination des couches de l'insert, une partie de la matière des couches externes 11,13 située en regard des évidements 9 de la feuille intermédiaire 7, puisse migrer vers les évidements 9, ce qui crée un défaut d'homogénéité de la matière dans ces zones des couches externes situées en face des trous 9. Dans tous les cas, ce manque de matière entraîne une densité de matière localement plus faible et par conséquent la force de pressage appliquée à ces endroits de densité plus faible y génère une différence de perception détectable visuellement, voire tactilement. Un élément visuel et/ou tactile est donc ainsi généré sur l'insert, notamment en surface des couches externes de l'insert, du fait du manque de matière ou de la densité inférieure au niveau des trous 9 comblés lors de la phase de lamination. Selon le matériau choisi pour l'insert, on peut observer l'effet visuel produit, par exemple la présence d'un logo au coeur de l'insert, par transparence ou par réflexion.

En outre, le remplissage des évidements 9 de l'insert par fluage de matière des couches externes vers la couche intermédiaire, produit un effet mécanique d'accrochage de type tenon/mortaise des couches externes sur la couche intermédiaire, de sorte que toute tentative ultérieure de séparation des couches de l'insert laissera des traces d'arrachement facilement détectables, ce qui contribue à la sécurité de l'insert et de la carte à puce qui utilise un tel insert.

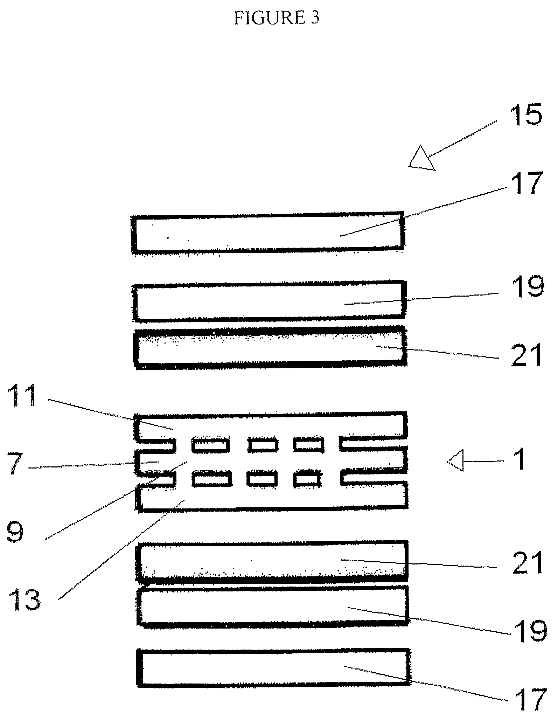

En figure 3, on a représenté la façon dont l'insert 1 selon l'invention peut être utilisé pour la réalisation d'une carte à puce 15. Il suffit de laminer les couches externes additionnelles 17, 19, 21 de la carte à puce, selon un procédé de lamination connu en soi. Les irrégularités de surface crées par les évidements de la feuille intermédiaire de l'insert restent visibles en surface de la carte à puce 15 terminée, soit directement, soit en fonction d'une certaine inclinaison de la carte en fonction de la lumière d'observation. Cette différence de perception est quelquefois appelée « flash » en terminologie anglosaxonne. Si les évidements sont assez profonds, il est également possible que les irrégularités de surface puissent être ressenties au toucher à l'extérieur de la carte.

L'insert pour carte à puce selon l'invention est particulièrement avantageux, dans la mesure où il crée au coeur de l'insert 1, et par conséquent au coeur de la carte à puce 15 utilisant l'insert, un élément visuel et/ou tactile qui permet d'identifier la provenance de l'insert. En outre, le procédé de fabrication de l'insert 1 par lamination fait que les évidements 9 de l'insert se remplissent avec la matière des couches externes de l'insert, et l'on obtient un assemblage qui ne peut quasiment pas être désassemblé sans laisser de traces prouvant que l'insert ou la carte à puce a été démontée. De ce fait, la structure obtenue grâce à l'invention est pratiquement indémontable. Si une délamination devait malgré tout intervenir, il est même possible de prévoir l'apparition au niveau des évidements comblés lors de la lamination, d'un logo, ou d'un texte ou message souhaité, par exemple l'expression « VOID » en terminologie anglosaxonne pour signifier que la carte est hors d'usage.

Lorsque l'insert 1 selon l'invention est utilisé pour fabriquer une carte à puce, le logo visible obtenu au niveau des évidements 9 sera incrusté au coeur même de la carte à puce. Il ne pourra donc pas être effacé, modifié, ou répété sur une autre carte. Mais il sera suffisament visible par transparence, ou en fonction de l'inclinaison de la carte par rapport à l'axe d'observation.

Bien entendu, l'homme du métier sera à même de choisir au mieux les couples de matériaux utilisés pour les couches de l'insert, ainsi que les températures et pressions appliquées lors de la lamination, pour permettre une fusion des matières à laminer et ainsi otenir une adhérence parfaite entre les matières. Les essais conduits par la demanderesse ont montré que cette technologie fonctionne particulièrement bien avec les matières Polycarbonate (PC) pour les couches de l'insert et/ou de la carte à puce, mais également avec le PVC ou PET.

## Revendications

1. Insert (1) pour carte à puce (15) à couches multiples, comportant une feuille intermédiaire (7) et de part et d'autre de la feuille intermédiaire (7), au moins une feuille externe (11,13) ayant une face en contact intime avec la face correspondante de la feuille intermédiaire (7), la feuille intermédiaire comportant au moins un évidement (9) avant la lamination de l'insert, l'une au moins une des feuilles externes (11,13) étant constituée d'un matériau fluable, de sorte que lors de la lamination de la feuille intermédiaire (7) avec les feuilles externes (11,13), une partie du matériau des feuilles externes (11,13) se déplace dans l'évidement (9) de la feuille intermédiaire de façon à créer en surface de l'insert (1) une irrégularité visuelle et/ou tactile susceptible d'indiquer l'authenticité de l'insert et/ou de la carte à puce, **caractérisé en ce que** la forme de l'évidement (9) représente un logo caractéristique de l'émetteur et/ou du fabricant de l'insert (1).

2. Insert (1) selon la revendication 1, **caractérisé en ce qu'**il comporte une pluralité d'évidements (9), disposés pour former un logo susceptible d'indiquer la provenance de l'insert.

3. Insert (1) selon la revendication 2, **caractérisé en ce que** la feuille intermédiaire (7) est pourvue d'une antenne (3), et **en ce que** les évidements (9) sont réalisés en-dehors de la zone couverte par l'antenne (3).

4. Insert (1) selon l'une des revendications précédentes, **caractérisé en ce que** la feuille intermédiaire (7) et les feuilles externes (11,13) sont réalisées en une matière choisie parmi le polycarbonate, le PVC et le PET.

5. Carte à puce (15) à structure laminée multicouche, **caractérisée en ce qu'**elle comporte un insert (1) selon l'une quelconque des revendications précédentes, et de part et d'autre dudit insert, au moins une couche externe (17,19,21) solidarisée avec la face correspondante de l'insert (1), notamment par lamination.

6. Carte à puce (15) selon la revendication 5, **caractérisée en ce qu'**au moins une des couches externes (17,19,21) est réalisée en une matière prise parmi le polycarbonate, le PVC et le PET.

7. Carte à puce (15) selon la revendication 5, **caractérisée en ce que** les couches externes (17,19,21) présentent une épaisseur d'environ 100 à 400 micromètres.

8. Procédé de fabrication d'un insert (1) pour carte à puce (15) selon l'une quelconque des revendications 1 à 4, **caractérisé en ce qu'**il comporte des étapes consistant à :
- fournir une couche de matériau pour la feuille intermédiaire (7) de l'insert (1), et aménager dans cette feuille intermédiaire (7) au moins un évidement (9) selon un motif prédéterminé ;
- de part et d'autre de la feuille intermédiaire (7) de l'insert (1), appliquer par lamination au moins une couche de matériau fluable (11,13), de sorte que pendant la lamination une partie du matériau des couches (11,13) de matériau fluables migre dans les évidements (9) de la feuille intermédiaire (7) de l'insert (1) de façon à laisser sur ledit insert des irrégularités détectables à l'oeil et/ou au toucher.

9. Procédé de fabrication d'une carte à puce multicouche (15), **caractérisé en ce qu'**il comporte des étapes consistant à :
- fournir un insert (1) selon la revendication 8 ;
- apposer de part et d'autre de l'insert (1), au moins une feuille de matériau externe (17,19,21), notamment de type polycarbonate, PVC ou PET;
- effectuer une opération de lamination finale pour solidariser l'insert (1) et les feuilles de matériau externes (17,19,21).

## Patentansprüche

1. Einsatz (1) für mehrschichtige Chipkarten (15), umfassend eine Zwischenfolie (7) und auf beiden Seiten der Zwischenfolie (7) mindestens eine Außenfolie (11, 13), die eine Seite aufweist, die in engem Kontakt mit der entsprechenden Seite der Zwischenfolie (7) ist, wobei die Zwischenfolie mindestens eine Ausnehmung (9) vor dem Laminieren des Einsatzes aufweist, wobei mindestens eine der Außenfolien (11, 13) aus einem fließfähigen Material derart gebildet ist, dass sich während des Laminierens der Zwischenfolie (7) mit den Außenfolien (11, 13) ein Teil des Materials der Außenfolien (11, 13) in der Aussparung (9) der Zwischenfolie verschiebt, um auf der Oberfläche des Einsatzes (1) eine visuelle und/oder fühlbare Unregelmäßigkeit zu erstellen, die die Echtheit des Einsatzes und/oder der Chipkarte angeben kann, **dadurch gekennzeichnet, dass** die Form der Ausnehmung (9) ein charakteristisches Logo des Emittenten und/oder des Herstellers des Einsatzes (1) darstellt.

2. Einsatz (1) nach Anspruch 1, **dadurch gekennzeichnet, dass** er mehrere Ausnehmungen (9) aufweist, die angeordnet sind, um ein Logo zu bilden, das die Herkunft des Einsatzes angeben kann.

3. Einsatz (1) nach Anspruch 2, **dadurch gekennzeichnet, dass** die Zwischenfolie (7) mit einer Antenne (3) versehen ist, und dass die Ausnehmungen (9) außerhalb des Bereichs erstellt sind, der von der Antenne (3) bedeckt ist.

4. Einsatz (1) nach einem der vorhergehenden Ansprüche, **dadurch gekennzeichnet, dass** die Zwischenfolie (7) und die Außenfolien (11, 13) aus einem Material hergestellt sind, das aus Polycarbonat, PVC und PET ausgewählt ist.

5. Chipkarte (15) mit laminierter Mehrschichtstruktur, **dadurch gekennzeichnet, dass** sie einen Einsatz (1) nach einem der vorhergehenden Ansprüche und auf beiden Seiten des Einsatzes mindestens eine Außenschicht (17, 19, 21) aufweist, die mit der entsprechenden Seite des Einsatzes (1) insbesondere durch Laminieren fest verbunden ist.

6. Chipkarte (15) nach Anspruch 5, **dadurch gekennzeichnet, dass** mindestens eine der Außenschichten (17, 19, 21) aus einem Material hergestellt ist, das aus Polycarbonat, PVC und PET genommen ist.

7. Chipkarte (15) nach Anspruch 5, **dadurch gekennzeichnet, dass** die Außenschichten (17, 19, 21) eine Dicke von ungefähr 100 bis 400 Mikrometern aufweisen.

8. Verfahren zur Herstellung eines Einsatzes (1) für eine Chipkarte (15) nach einem der Ansprüche 1 bis 4, **dadurch gekennzeichnet, dass** es Schritte umfasst, die darin bestehen:
- eine Materialschicht für die Zwischenfolie (7) des Einsatzes (1) bereitzustellen und in dieser Zwischenfolie (7) mindestens eine Ausnehmung (9) nach einem vorbestimmten Muster anzulegen;
- auf beiden Seiten der Zwischenfolie (7) des Einsatzes (1) durch Laminieren mindestens eine Schicht aus fließfähigem Material (11, 13) derart aufzutragen, dass während des Laminierens ein Teil des Materials der Schichten (11, 13) des fließfähigen Materials in die Ausnehmungen (9) der Zwischenfolie (7) des Einsatzes (1) migriert, um auf dem Einsatz Unregelmäßigkeiten zu lassen, die mit dem Auge und/oder bei Berührung erkennbar sind.

9. Verfahren zur Herstellung einer mehrschichtigen Chipkarte (15), **dadurch gekennzeichnet, dass** es Schritte umfasst, die darin bestehen:
- einen Einsatz (1) nach Anspruch 8 bereitzustellen;
- auf beiden Seiten des Einsatzes (1) mindestens eine Außenfolie aus Material (17, 19, 21), insbesondere vom Typ Polycarbonat, PVC und PET aufzubringen;
- einen abschließenden Laminierungsvorgang durchzuführen, um den Einsatz (1) und die Außenfolien aus Material (17, 19, 21) fest zu verbinden.

## Claims

1. Insert (1) for a smartcard (15) comprising multiple layers, including an intermediate sheet (7) and, on either side of the intermediate sheet (7), at least one external sheet (11, 13) having a face making intimate contact with the corresponding face of the intermediate sheet (7), the intermediate sheet including at least one void (9) before lamination of the insert, one at least of the external sheets (11, 13) being made from a flowable material, so that during the lamination of the intermediate sheet (7) with the external sheets (11, 13), some of the material of the external sheets (11, 13) moves into the void (9) in the intermediate sheet so as to create on the surface of the insert (1) a visual and/or tactile irregularity capable of indicating the authenticity of the insert and/or of the smartcard, **characterized in that** the shape of the void (9) represents a logo characteristic of the issuer and/or manufacturer of the insert (1).

2. Insert (1) according to Claim 1, **characterized in that** it includes a plurality of voids (9) arranged to form a logo capable of indicating the provenance of the insert.

3. Insert (1) according to Claim 2, **characterized in that** the intermediate sheet (7) is provided with an antenna (3), and **in that** the voids (9) are produced outside of the zone covered by the antenna (3).

4. Insert (1) according to one of the preceding claims, **characterized in that** the intermediate sheet (7) and the external sheets (11, 13) are made of a material chosen from polycarbonate, PVC and PET.

5. Smartcard (15) having a multilayer laminated structure, **characterized in that** it includes an insert (1) according to any one of the preceding claims, and, on either side of said insert, at least one external layer (17, 19, 21) securely fastened to the corresponding face of the insert (1), especially by lamination.

6. Smartcard (15) according to Claim 5, **characterized in that** at least one of the external layers (17, 19, 21) is made from a material selected from polycarbonate, PVC and PET.

7. Smartcard (15) according to Claim 5, **characterized in that** the external layers (17, 19, 21) have a thickness of about 100 to 400 microns.

8. Process for manufacturing an insert (1) for a smartcard (15) according to any one of Claims 1 to 4, **characterized in that** it includes steps consisting in:
- providing a layer of material for the intermediate sheet (7) of the insert (1), and producing in this intermediate sheet (7) at least one void (9) in a preset pattern;
- on either side of the intermediate sheet (7) of the insert (1), applying by lamination at least one layer of flowable material (11, 13), so that during the lamination some of the material of the layers (11, 13) of flowable material migrates into the voids (9) in the intermediate sheet (7) of the insert (1) so as to leave on said insert irregularities detectable to the eye and/or to the touch.

9. Process for manufacturing a multilayer smartcard (15), **characterized in that** it includes steps consisting in:
- providing an insert (1) according to Claim 8;
- placing, on either side of the insert (1), at least one sheet of an external material (17, 19, 21), especially polycarbonate, PVC or PET; and
- carrying out a final lamination operation in order to securely fasten the insert (1) and the sheets of external material (17, 19, 21).
